# EUROPÄISCHE PATENTANMELDUNG

(11) **EP 3 882 500 A1**
(43) Veröffentlichungstag der Anmeldung: **22.09.2021**
(21) Anmeldenummer: 21167560.8
(22) Anmeldetag: 13.06.2018
(51) Int. Cl.: F16K 31/385, F16K 7/17

(54) **VENTILANORDNUNG**

(30) Priorität: 07.09.2017 DE 202017105426 U
(62) Teilanmeldung aus: 18731419.0
(71) Anmelder: Neoperl GmbH, 79379 Müllheim (DE)
(72) Erfinder: BIAN, Yichao, 79379 Müllheim (DE); TEMPEL, Marc, 79111 Freiburg (DE)
(74) Vertreter: Mertzlufft-Paufler, Cornelius

(57) **Zusammenfassung**

Die Erfindung betrifft eine Ventilanordnung (1) mit einem Hauptventil (2) und einem zur Steuerung des Hauptventils vorgesehenen und in einer Einsetzrichtung (13) in einer Pilotventilaufnahme (12) eingesetzten Pilotventil (8), wobei durch Verschließen des Pilotventils (8) innerhalb einer durch eine Membran (6) abgeschlossene Druckkammer (7) ein Druck aufbaubar ist, wodurch ein Ventilsitz (3) zwischen einem Hauptventileingang (4) und einem Hauptventilausgang (5) verschließbar ist, wobei durch Öffnen des Pilotventils (8) eine Druckentlastung innerhalb der Druckkammer (7) durch Abfließen des Wassers über einen mit der Druckkammer verbundenen Zulauf (14) der Pilotventilaufnahme (12) und einen daran angrenzenden durch einen Grundkörper (9) des Pilotventils (8) ausgebildeten Pilotventileingang (10) und einen durch den Grundkörper (9) des Pilotventils (8) ausgebildeten Pilotventilausgang (11) und einen daran angrenzenden Ablauf (15) in den Hauptventilausgang (5) einstellbar ist, wobei der Ablauf (15) abströmseitig der Membran (6) in den Hauptventilausgang (5) mündet, wobei der Pilotventileingang (10) und der Pilotventilausgang (11) entlang einer Längsachse des Pilotventils (8) zueinander versetzt angeordnet sind

## Beschreibung

Die Erfindung betrifft eine Ventilanordnung mit einem Hauptventil, welches eine einen Ventilsitz zwischen einem Hauptventileingang und einem Hauptventilausgang wahlweise verschließende und freigebende Membran und eine von der Membran abgeschlossene Druckkammer, mit welcher die Membran durch eine Druckbeaufschlagung schaltbar ist, aufweist, und mit einem Pilotventil, mit welchem eine Druckentlastung der Druckkammer in den Hauptventilausgang des Hauptventils steuerbar ist, wobei das Pilotventil einen Grundkörper aufweist, an welchem ein Pilotventileingang und ein Pilotventilausgang ausgebildet ist, wobei der Pilotventileingang mit dem Pilotventilausgang über das Pilotventil wahlweise verbindbar und von diesem trennbar ist, und der Grundkörper in eine Pilotventilaufnahme in einer Einsetzrichtung eingesetzt ist, wobei die Pilotventilaufnahme einen zu dem Pilotventileingang korrespondierenden Zulauf und einen zu dem Pilotventilausgang korrespondierenden Ablauf hat, wobei der Zulauf mit der Druckkammer verbunden ist und der Ablauf abströmseitig der Membran in den Hauptventilausgang mündet.

Derartige Ventilanordnung weisen insbesondere den Nachteil auf, dass das Pilotventil bei unterschiedlichen Ausführungsformen vorbekannter Ventilanordnungen auch jeweils unterschiedlich und individuell angepasst an die jeweilige Ausführungsform ausgeführt sein muss. Es ist also nicht möglich, bei unterschiedlichen Ausführungsformen von Ventilanordnungen nur ein, insbesondere baugleiches, Pilotventil vorzusehen. Durch die Möglichkeit einer Verwendung eines baugleichen Pilotventils wäre daher ein enormes Einsparpotenzial bei der Fertigung von Ventilanordnungen der eingangs erwähnten Art gegeben.

Unterschiedliche Ausführungsformen können beispielsweise solche umfassen, bei welchen eine Verstellrichtung des Haupt- und des Pilotventils parallel oder schräg, insbesondere senkrecht, zueinander ausgerichtete sind. Allgemein ausgedrückt können also Ventilanordnungen umfasst sein, bei welchen eine unterschiedliche Einsetzrichtung zum Einsetzen des Pilotventils vorgesehen ist.

Dabei wäre es wünschenswert, wenn für unterschiedliche Ausführungsformen ein baugleich gefertigtes Pilotventil einsetzbar wäre, um die Fertigungskosten insgesamt zu reduzieren.

Ein damit verbundenes Problem besteht dabei besonders hinsichtlich einer Kupplungsstelle zwischen dem Grundkörper des Pilotventils und der Pilotventilaufnahme. Regelmäßig ist eine zuverlässig abgedichtete und stabile Verbindung des Grundkörpers und des Pilotventils nur dadurch erreichbar, dass diese beiden Bauteile fest miteinander verbunden sind und daher entweder überhaupt nicht voneinander lösbar oder nur mittels Werkzeug voneinander lösbar sind. Beispielsweise kann der Grundkörper des Pilotventils mit der Pilotaufnahme fest verschraubt sein. Dies kann deshalb erforderlich sein, da das mit dem Grundkörper in die Pilotventilaufnahme eingesetzte Pilotventil an der Kupplungsstelle axial gegenüber der Pilotventilaufnahme abgedichtet sein muss, um eine Leckage zwischen den beiden Bauteilen zu vermeiden.

Umgekehrt kann es bei einer unzureichend stabilen Verkupplung des Grundkörpers mit der Pilotventilaufnahme dazu kommen, dass die in der Regel als Axialdichtung ausgebildete Dichtung zwischen dem Pilotventileingang und Zulauf sowie zwischen dem Pilotventilausgang und dem Ablauf unzureichend ist und es daher langfristig zu Wasserschäden an die Ventilanordnung umgebenden Bauteilen, wie Armaturen, aufgrund von Leckagen kommen kann.

Der Erfindung liegt daher die Aufgabe zugrunde, eine Ventilanordnung der eingangs genannten Art bereitzustellen, bei welcher die zuvor genannten Nachteile ausgeräumt sind.

Zur Lösung dieser Aufgabe sind erfindungsgemäß die Merkmale des Anspruchs 1 vorgesehen. Insbesondere wird erfindungsgemäß zur Lösung der genannten Aufgabe vorgeschlagen, dass der Pilotventileingang und der Pilotventilausgang zumindest in Einsetzrichtung zueinander versetzt angeordnet sind. Die Positionen von Pilotventileingang und Pilotventilausgang können somit durch eine Verschiebung, gegebenenfalls überlagert durch eine in Bezug auf die Einsteckrichtung radiale und/oder in Umfangsrichtung ausgerichtete Rotation, ineinander überführbar sein. Somit lässt sich im Vergleich zu vorbekannten Ventilanordnungen der eingangs genannten Art eine einfachere und dennoch zuverlässige Abdichtung zwischen dem Grundkörper des Pilotventils und der Pilotventilaufnahme erreichen. Aufgrund der in Einsetzrichtung versetzten Anordnung des Pilotventileingangs und des Pilotventilausgangs ist eine besondere Wasserführung einrichtbar, wodurch bei Gebrauch der Ventilanordnung kein derart hoher Anpressdruck des Pilotventils an die Pilotventilaufnahme wie bei vorbekannten Ventilanordnung der eingangs genannten Art erforderlich ist, um Leckagen zu verhindern. Somit kann beispielsweise auf eine Verschraubung oder eine ähnlich feste Verbindung, durch welche ein Anpressdruck des Pilotventils auf die Pilotventilaufnahme bei vorbekannten Ventilanordnungen erzeugbar ist, vollkommen verzichtet werden. Ein weiterer Vorteil besteht darin, dass das Pilotventil unabhängig von dessen Ausrichtung relativ zum Hauptventil stets baugleich ausgestaltbar ist. Somit lassen sich die Fertigungskosten unterschiedlicher Ausführungsformen der erfindungsgemäßen Ventilanordnung deutlich reduzieren, da nicht mehrere unterschiedliche, an die jeweilige Ausführungsform angepasste Pilotventile hergestellt werden müssen, sondern das Pilotventil in unterschiedlichen Einbauvarianten wiederverwendet werden kann. Die Erfindung ermöglicht es zudem, Bauraum quer zur Einsetzrichtung zu reduzieren, da der Zulauf und der Ablauf in Einsetzrichtung hintereinander angeordnet werden können.

Gemäß einer vorteilhaften Weiterbildung der Erfindung kann es vorgesehen sein, dass zumindest in Gebrauchsstellung zwischen dem Pilotventileingang und dem Pilotventilausgang ein quer zur Einsetzrichtung wirkendes Dichtelement, insbesondere ein quer zur Einsetzrichtung wirkender Dichtungsring, angeordnet ist. Aufgrund der besonderen Konstruktion des Pilotventils und der Pilotventilaufnahme ist es möglich, auf Axialdichtungen zu verzichten, bei welchen ein deutlich höherer Anpressdruck zwischen dem Pilotventil und der Pilotventilaufnahme erforderlich ist als bei einem quer zu Einsetzrichtung wirkenden Dichtelement. Bevorzugt ist das Dichtelement an dem Grundkörper angeordnet.

Alternativ oder ergänzend dazu kann es weiter vorteilhaft sein, wenn durch ein oder das bereits zuvor genannte Dichtelement, insbesondere den Dichtungsring, eine Radialdichtung zwischen dem Pilotventileingang und dem Pilotventilausgang, insbesondere zwischen dem Grundkörper und der Pilotaufnahme, ausbildet ist. Durch die Ausbildung einer Radialdichtung kann eine Leckage zwischen dem Pilotventileingang und dem Pilotventilausgang verhindert werden. Gleichzeitig kann eine Kopplungsstelle zwischen dem Pilotventil und der Pilotventilaufnahme derart ausgestaltet sein, dass eine geringfügige Verschiebung des Grundkörpers des Pilotventils innerhalb der Pilotventilaufnahme und relativ zur Pilotventilaufnahme aufgrund eines Spiels zwischen den beiden Bauteilen tolerierbar ist. Die Kopplung kann also lediglich derart ausgestaltet sein, dass ein Herausrutschen des Pilotventils aus der Pilotventilaufnahme verhinderbar ist. Durch die Kopplung muss also kein Anpressdruck des Pilotventils auf die Pilotventilaufnahme erzeugt werden.

Gemäß einer weiteren vorteilhaften Weiterbildung der Erfindung kann es vorgesehen sein, dass der Zulauf und/oder der Ablauf quer zu der Einsetzrichtung ausgerichtet ist/sind und/oder dass der Pilotventileingang und/oder der Pilotventilausgang quer zu der Einsetzrichtung ausgerichtet ist/sind. Durch die unterschiedlichen Möglichkeiten der Ausrichtung des Zulaufs und des Ablaufs und/oder, vorzugsweise dazu korrespondierend, des Pilotventileingangs und des Pilotventilausgangs kann eine besonders große Vielfalt unterschiedlicher Ausführungsformen erreicht werden, wobei die erfindungsgemäße Grundkonstruktion unverändert bleiben kann.

Um eine kostengünstige und dennoch zuverlässige, werkzeuglos lösbare Kopplung des Pilotventils mit der Pilotventilaufnahme auszuführen, kann es vorteilhaft sein, wenn an dem Grundkörper ein Befestigungsmittel und an der Pilotventilaufnahme ein Gegenbefestigungsmittel ausgebildet ist, die eine arretierbare und lösbare Verbindung bilden. Beispielsweise kann vorgesehen sein, dass die lösbare Verbindung als ein Steck-Dreh-Verschluss, vorzugsweise als ein Bajonettverschluss, ausgebildet ist. Somit ist eine einfach Entkopplung des Pilotventils von der Pilotventilaufnahme möglich. Bei Auftreten eines Defekts ist daher das Pilotventil und/oder das Hauptventil einzeln austauschbar.

Gemäß einer weiteren vorteilhaften Weiterbildung der Erfindung kann es vorgesehen sein, dass die Verbindung zwischen dem Zulauf und der Druckkammer und/oder die Verbindung zwischen dem Ablauf und dem Hauptventilausgang über eine Schlauchverbindung realisiert ist. Dies hat den Vorteil dass die Ventilaufnahme relativ zum Hauptventil, insbesondere relativ zum Gehäuse des Hauptventils, annähernd frei positionierbar ist. Insbesondere ist das Pilotventil weiter beabstandet vom Hauptventil anordenbar. Eine Schlauchverbindung hat außerdem den Vorteil, dass ihre Länge einfach an die Einbausituation, beispielsweise durch Abtrennen eines Schlauchstücks, anpassbar ist und/oder dass die Schlauchverbindung flexibel ist. Dies erlaubt es, dass die Schlauchverbindung frei verbiegbar ist, was den Einbau der Ventilanordnung erleichtert, insbesondere da eine Platzierung der Pilotventilaufnahme beabstandet zum Hauptventil möglich ist.

Um eine besonders zuverlässige Abdichtung zwischen dem Pilotventil und der Pilotventilaufnahme im Bereich zwischen dem Pilotventileingang und dem Pilotventilausgang ausgestalten zu können, kann es zweckmäßig sein, wenn der Pilotventileingang und der Pilotventilausgang in Einsetzrichtung voneinander beabstandet angeordnet sind. Dies ermöglicht es, ein Dichtelement, wie beispielsweise einen oder den bereits zuvor genannten Dichtungsring, in diesem Bereich zwischen dem Pilotventileingang und dem Pilotventilausgang anzuordnen.

Gemäß einer weiteren vorteilhaften Weiterbildung der Ventilanordnung kann es vorgesehen sein, dass der Pilotventileingang am Grundkörper als zumindest abschnittsweise, beispielsweise in einem Mündungsbereich, radial verlaufender Kanal und/oder der Pilotventilausgang am Grundkörper als zumindest abschnittsweise, beispielsweise in einem Mündungsbereich, axial verlaufender Kanal ausgebildet ist. Somit ist in Gebrauchsstellung des Pilotventils eine Druckentlastung einer Halterung, durch welche das Pilotventil in der Pilotventilaufnahme gehalten ist, erreichbar. Hierbei wird die Erkenntnis genutzt, dass der Ablauf im Wesentlichen druckfrei ist.

Gemäß einer bevorzugten Weiterbildung der Ventilanordnung kann es zweckmäßig sein, wenn die Pilotventilaufnahme in einem Gehäuseteil des Hauptventils ausgebildet ist. Somit ist eine sehr kompakte Ausgestaltungsform der Ventilanordnung erreichbar. Vorzugsweise ist der Gehäuseteil als vom übrigen Gehäuse abnehmbarer Adapter ausgestaltet. Dies erlaubt es, die Ausrichtung des Pilotventils relativ zum Hauptventil durch einfaches Wechseln des Adapters zu ändern.

Gemäß einer weiteren vorteilhaften Weiterbildung kann es vorgesehen sein, dass die Pilotventilaufnahme topfförmig ausgebildet ist. Besonders vorteilhaft kann es dabei sein, wenn die Pilotventilaufnahme wenigstens halb so tief wie breit, vorzugsweise wenigstens so tief wie breit oder sogar wenigstens doppelt so tief wie breit, ausgestaltet ist. Dadurch lässt sich das Pilotventil stabil, insbesondere ohne zusätzliche seitliche Stabilisierungselemente, in der Pilotventilaufnahme anordnen. Topfförmig kann in diesem Zusammenhang beispielsweise bedeuten, dass die Pilotventilaufnahme einen Aufnahmeraum aufweist, der durch einen Boden und eine beispielsweise zylindrische oder gestuft zylindrische Lateralwand begrenzt sein kann. Insbesondere kann dieser Aufnahmeraum zumindest teilweise zylindrisch und/oder kegelstumpfförmig und/oder rechteckig und/oder quadratisch ausgebildet sein.

Gemäß einer weiteren vorteilhaften Weiterbildung kann es vorgesehen sein, dass der Ablauf an einem inneren Endbereich der Pilotventilaufnahme ausgebildet ist. Hierbei kann der Pilotventilausgang axial und/oder in Einsetzrichtung orientiert ist. Die Erfindung ermöglicht somit eine besonders platzsparende Ausgestaltung der Pilotventilaufnahme und des Pilotventils. Ferner ist dadurch eine Druckentlastung einer Halterung des Pilotventils an der Pilotventilaufnahme möglich.

Gemäß einer weiteren vorteilhaften Weiterbildung der Ventilanordnung kann es vorgesehen sein, dass eine Mündungsöffnung der Verbindung zwischen dem Ablauf und dem Hauptventilausgang beabstandet zu der Membran des Hauptventils angeordnet ist. Dies ermöglicht eine Kopplung des Pilotventils an das Hauptventil unabhängig davon wie das Hauptventil ausgestaltet ist. Insbesondere ist keine konstruktive Anpassung der Druckkammer und/oder der Membran erforderlich.
Es kann vorteilhaft sein, wenn das Pilotventil handbetätigbar ist. Somit ist eine einfache Bedienung der Ventilanordnung durch einen Benutzer möglich.

Besonders vorteilhaft kann es dabei sein, wenn das Pilotventil zur Betätigung eine Drucktastenmechanik, einen Kippschalter und/oder einen Drehschalter hat. Somit ist ein einfaches Öffnen und Schließen des Hauptventils annähernd unabhängig von einem in der Druckkammer des Hauptventils herrschenden Drucks über das Pilotventil möglich.

Eine besonders bevorzugte Weiterbildung der Ventilanordnung kann vorsehen, dass das Pilotventil einen Ventilstößel aufweist. Durch ein Verstellen des Ventilstößel zwischen einer Offenstellung und einer Schließstellung, in welcher der Ventilstößel vorzugsweise in einen Ventilsitz eingeführt ist, ist ein Durchfluss durch das Pilotventil einfach und effizient regulierbar. In einer Freigabeposition des Ventilstößels kann Wasser vom Pilotventileingang durch das Pilotventil in den Pilotventilausgang strömen. In dieser Freigabestellung liegt das Hauptventil ebenfalls in Offenstellung vor. In Verschlussstellung des Ventilstößels des Pilotventils findet kein Durchfluss durch das Pilotventil statt und es baut sich infolgedessen ein Druck innerhalb der Druckkammer des Hauptventils auf. Dadurch wird ein Ventilkörper des Hauptventils in den Ventilsitz gepresst und somit das Hauptventil geschlossen.

Gemäß einer weiteren vorteilhaften Weiterbildung der Ventilanordnung kann es vorgesehen sein, dass das Pilotventil als ein Quetschventil ausgebildet ist. Durch ein Quetschventil ist eine optimale Absperrung erreichbar, wobei die Herstellungskosten relativ gering sind.

Besonders zweckmäßig kann es sein, wenn das dass das Pilotventil in der Pilotventilaufnahme lösbar befestigt ist, insbesondere mittels eines Bajonettverschlusses lösbar befestigt ist. Dies ermöglicht ein werkzeugloses Trennen des Pilotventils von der Pilotventilaufnahme. Die Ausgestaltung der Pilotventilaufnahme in Topfform und/oder die Ausbildung radialer Dichtringe kann das notwendige Spiel bereitstellen, um den Bajonettenverschluss zu schließen.

Zur Lösung der Aufgabe betrifft die Erfindung weiter eine Baureihe von Ventilanordnungen gemäß des im Anspruchssatz enthaltenen nebengeordneten Anspruchs mit wenigstens zwei Varianten, die jeweils eine Ventilanordnung, wie sie hierin beschrieben und beansprucht ist, bilden. Insbesondere wird erfindungsgemäß zur Lösung der Aufgabe vorgeschlagen, dass die Pilotventile der wenigstens zwei Varianten baugleich sind und wobei in einer ersten Variante der wenigstens zwei Varianten das Pilotventil in einer an einem Gehäuseteil des Hauptventils ausgebildeten Pilotventilaufnahme angeordnet ist und in einer zweiten Variante der wenigstens zwei Varianten das Pilotventil in einer in Bezug auf das jeweilige Hauptventil abweichenden Position und/oder Orientierung angeordnet ist. Somit hat ein Nutzer die Möglichkeit, die Auswahl der Ventilanordnung bedarfsgerecht entsprechend einer Einbausituation zu treffen. Der Nutzer erlangt dadurch eine deutlich größere Flexibilität, da es nicht erforderlich ist, vor dem Einbau einer Ventilanordnung abzuklären, welche Einbauvariante verwendbar ist und welche nicht. Zumindest eine der von der Baureihe umfassten Ventilanordnungen ist für die jeweils gegebenen Bedingungen geeignet und/oder daran abgestimmt.

Gemäß einer vorteilhaften Weiterbildung der Baureihe kann es vorgesehen sein, dass in der zweiten Variante der wenigstens zwei Varianten das Pilotventil in einer von dem Hauptventil separaten Pilotventilaufnahme angeordnet ist. Dies ermöglicht es, dass das Pilotventil annähernd unabhängig vom Hauptventil anordenbar ist. Insbesondere ist das Pilotventil beabstandet zum Hauptventil anordenbar.

Besonders vorteilhaft kann es gemäß einer bevorzugten Ausgestaltung der Baureihe sein, wenn in der zweiten Variante das Pilotventil über wenigstens eine Schlauchverbindung mit dem Hauptventil verbunden ist. Eine Schlauchverbindung hat den Vorteil, dass ihre Länge einfach an die Einbausituation, beispielsweise durch Abtrennen eines Schlauchstücks, anpassbar ist und/oder dass die Schlauchverbindung flexibel ist. Dies erlaubt es, dass die Schlauchverbindung frei verbiegbar ausgestaltet werden kann, was den Einbau der Ventilanordnung erleichtert.

Gemäß einer weiteren vorteilhaften Weiterbildung der Baureihe kann es vorgesehen sein, dass sich die erste Variante und die zweite Variante durch einen zwischen dem Hauptventil und dem Pilotventil vermittelnden Adapter unterscheiden, insbesondere wobei der Adapter zumindest teilweise die Druckkammer bildet.

Die Erfindung betrifft also eine Ventilanordnung mit einem Hauptventil und einem zur Steuerung des Hauptventils vorgesehenen und in einer Einsetzrichtung in einer Pilotventilaufnahme eingesetzten Pilotventil, wobei durch Verschließen des Pilotventils innerhalb einer durch eine Membran abgeschlossene Druckkammer ein Druck aufbaubar ist, wodurch ein Ventilsitz zwischen einem Hauptventileingang und einem Hauptventilausgang verschließbar ist, wobei durch Öffnen des Pilotventils eine Druckentlastung innerhalb der Druckkammer durch Abfließen des Wassers über einen mit der Druckkammer verbundenen Zulauf der Pilotventilaufnahme und einen daran angrenzenden durch einen Grundkörper des Pilotventils ausgebildeten Pilotventileingang und einen durch den Grundkörper des Pilotventils ausgebildeten Pilotventilausgang und einen daran angrenzenden Ablauf in den Hauptventilausgang einstellbar ist, wobei der Ablauf abströmseitig der Membran in den Hauptventilausgang mündet, wobei der Pilotventileingang und der Pilotventilausgang entlang einer Längsachse des Pilotventils zueinander versetzt angeordnet sind.

Die Erfindung wird nun anhand mehrerer Ausführungsbeispiele näher erläutert, ist jedoch nicht auf diese Ausführungsbeispiele beschränkt. Weitere Ausführungsbeispiele ergeben sich durch die Kombination der Merkmale einzelner oder mehrerer Ansprüche untereinander und/oder mit einzelnen oder mehreren Merkmalen der Ausführungsbeispiele.

Es zeigt:
- Fig. 1: eine perspektivische Darstellung einer ersten Ausführungsform der erfindungsgemäßen Ventilanordnung, wobei die Verstellrichtung des Hauptventils dabei senkrecht zum Verstellrichtung des Pilotventils verläuft,
- Fig. 2: einen Längsschnitt der Ventilanordnung gemäß Fig. 1 in perspektivischer Ansicht,
- Fig. 3: einen Schnitt durch das Gehäuse des Hauptventils und des Pilotventils der Ventilanordnung gemäß den Fig. 1 und 2 in einer Draufsicht,
- Fig. 4: eine Längsschnittdarstellung der Ventilanordnung gemäß den Fig. 1 bis 3 in Seitenansicht, wobei das Pilotventil in Offenstellung vorliegt,
- Fig. 5: eine Längsschnittdarstellung der Ventilanordnung gemäß den Fig. 1 bis 4 in Seitenansicht, wobei das Pilotventil in Schließstellung vorliegt,
- Fig. 6: eine perspektivische Darstellung einer zweiten Ausführungsform der erfindungsgemäßen Ventilanordnung, wobei die Verstellrichtung des Hauptventils dabei koaxial zur Verstellrichtung des Pilotventils verläuft,
- Fig. 7: eine Längsschnittdarstellung der Ventilanordnung gemäß Fig. 6 in Seitenansicht, wobei das Pilotventil in Schließstellung vorliegt,
- Fig. 8: eine Längsschnittdarstellung der Ventilanordnung gemäß den Fig. 6 und 7 in Seitenansicht, wobei das Pilotventil in Offenstellung vorliegt,
- Fig. 9: eine perspektivische Darstellung einer dritten Ausführungsform der erfindungsgemäßen Ventilanordnung, wobei die Verstellrichtung des Hauptventils dabei parallel zur Verstellrichtung des Pilotventils verläuft,
- Fig. 10: eine Längsschnittdarstellung der Ventilanordnung gemäß Fig. 9 in Seitenansicht, wobei das Pilotventil in Schließstellung vorliegt,
- Fig. 11: eine Längsschnittdarstellung der Ventilanordnung gemäß den Fig. 9 und 10 in Seitenansicht, wobei das Pilotventil in Offenstellung vorliegt,
- Fig. 12: eine perspektivische Darstellung einer vierten Ausführungsform der erfindungsgemäßen Ventilanordnung, wobei die Pilotventilaufnahme mit dem darin eingesetzten Pilotventil beabstandet vom Hauptventil angeordnet ist,
- Fig. 13: eine Längsschnittdarstellung der Ventilanordnung gemäß Fig. 12 in Seitenansicht, wobei das Pilot-ventil in Schließstellung vorliegt,
- Fig. 14: eine Längsschnittdarstellung der Ventilanordnung gemäß den Fig. 12 und 13 in Seitenansicht, wobei das Pilotventil in Offenstellung vorliegt,
- Fig. 15: eine Schnittansicht eines Längsschnitts durch eine Pilotventilaufnahme mit darin eingesetztem Pilotventil,
- Fig. 16: eine perspektivische Darstellung der Pilotventilaufnahme mit dem darin eingesetzten Pilotventil aus Fig. 15,
- Fig. 17: eine Schnittansicht eines Längsschnitts durch ein Pilotventil einer Ausführungsform der erfindungsgemäßen Ventilanordnung, wobei das Pilotventil in Offenstellung gezeigt ist,
- Fig. 18: eine Schnittansicht eines Längsschnitts durch ein Pilotventil einer Ausführungsform der erfindungsgemäßen Ventilanordnung, wobei das Pilotventil in Schließstellung gezeigt ist,
- Fig. 19: eine perspektivische Ansicht auf das Pilotventil aus den Fig. 17 und 18, wobei das Pilotventil in Offenstellung gezeigt ist.

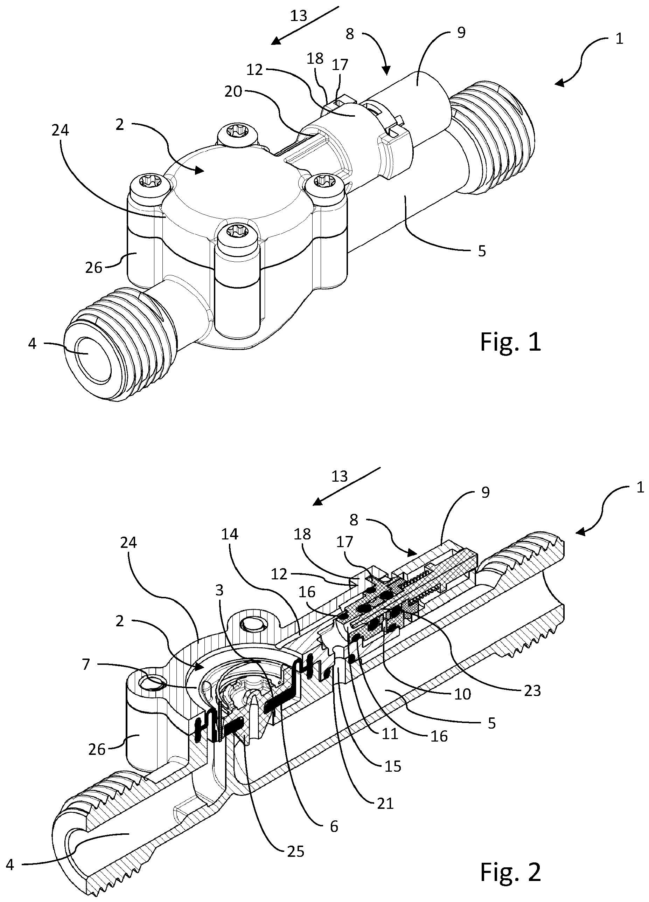

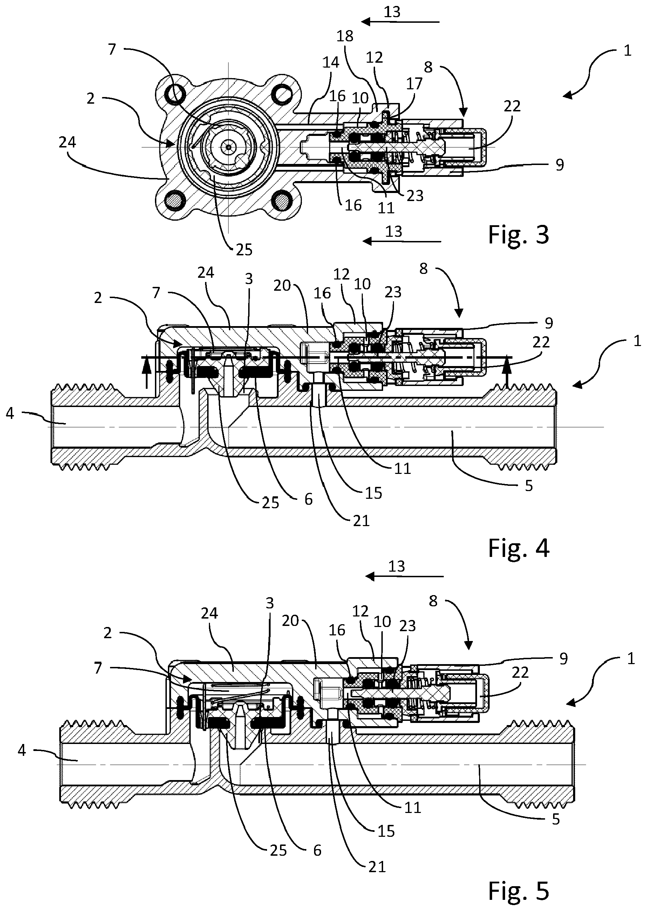

Die Figuren 1 bis 5 zeigen ein erstes Ausführungsbeispiel einer erfindungsgemäßen Ventilanordnung, die im Ganzen als 1 bezeichnet wird.

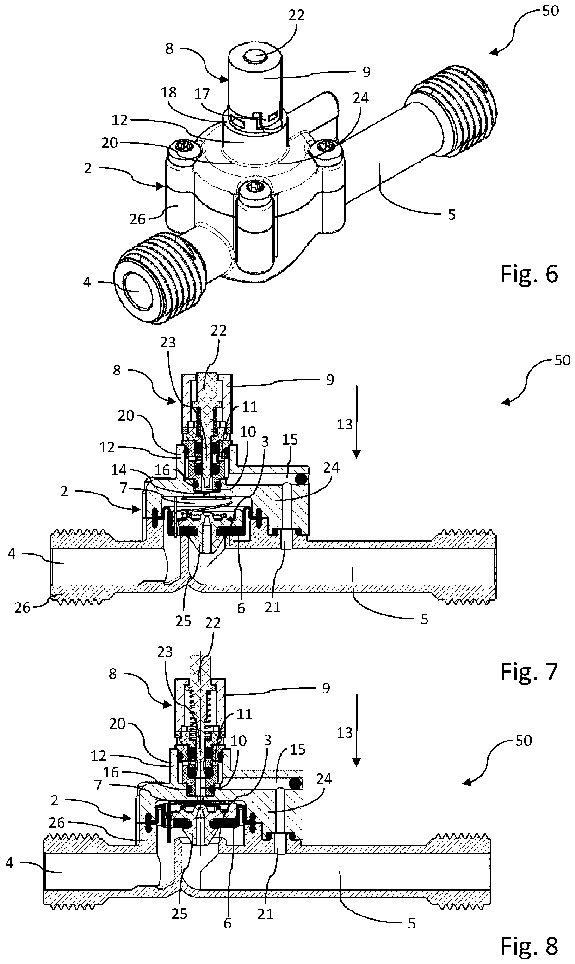

Die Figuren 6 bis 8 zeigen ein zweites Ausführungsbeispiel einer erfindungsgemäßen Ventilanordnung, die im Ganzen als 50 bezeichnet wird.

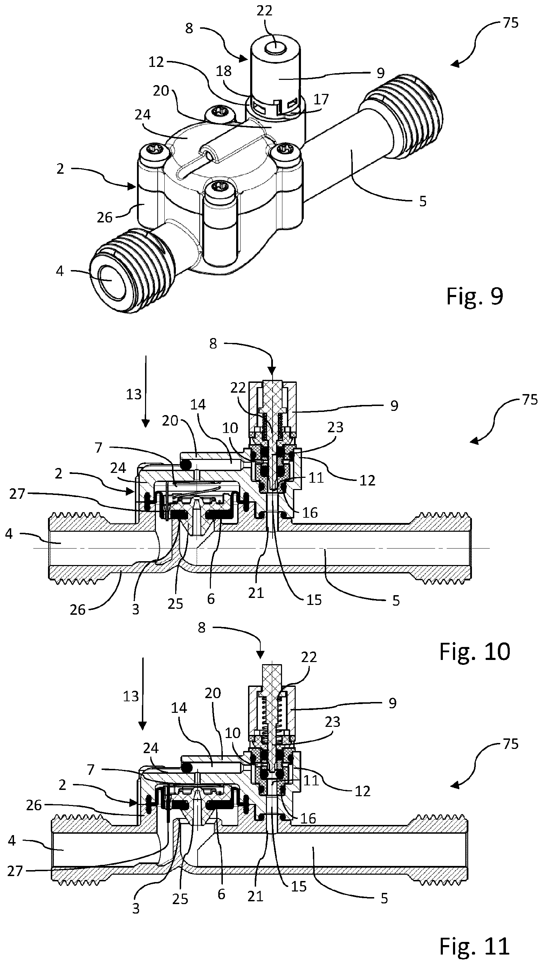

Die Figuren 9 bis 11 zeigen ein drittes Ausführungsbeispiel einer erfindungsgemäßen Ventilanordnung, die im Ganzen als 75 bezeichnet wird.

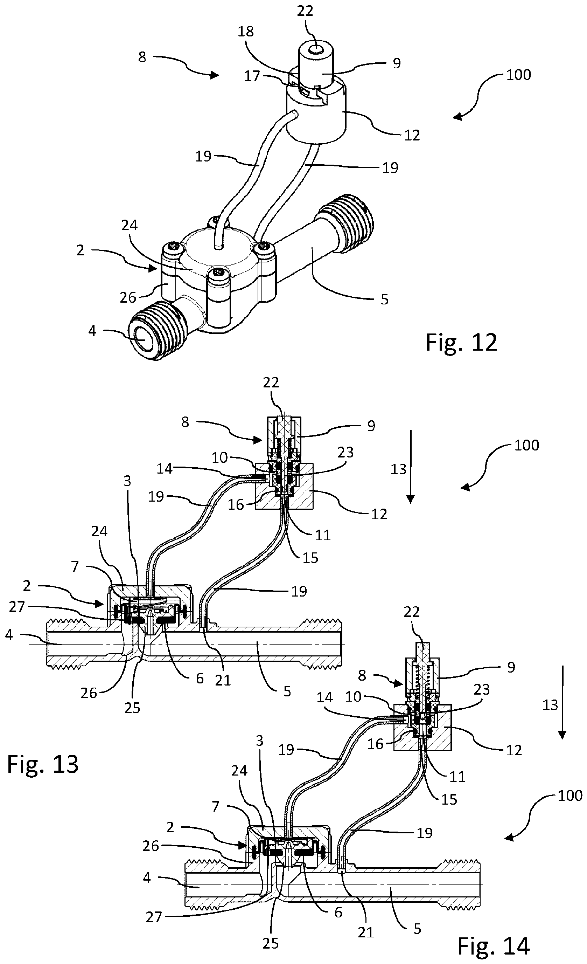

Die Figuren 12 bis 14 zeigen ein viertes Ausführungsbeispiel einer erfindungsgemäßen Ventilanordnung, die im Ganzen als 100 bezeichnet wird.

Es sind jedoch noch weitere Ausführungsformen denkbar, die nicht anhand von Figuren dargestellt wurden.

Die Ventilanordnung 1, 50, 75, 100 weist jeweils ein in einem Gehäuse 26 angeordnetes Hauptventil 2 auf. Das Hauptventil 2 weist eine Membran 6 auf, durch welche eine Druckkammer 7 abgeschlossen ist. Mittels einer Druckbeaufschlagung der Membran 6 ist das Hauptventil 2 in eine Schließstellung schaltbar. Dabei kann über eine Zulauföffnung 27 aus einem Hauptventileingang 4 Wasser in die Druckkammer 7 einströmen, wodurch sich innerhalb der Druckkammer 7 ein Druck aufbaut, der einen Ventilkörper 25 in einen Ventilsitz 3 drückt und so kein Wasser mehr vom Hauptventileingang 4 durch das Hauptventil 2 in einen Hauptventilausgang 5 strömen kann.

Das Pilotventil 8 weist einen Grundkörper 9 auf. Am Grundkörper 9 des Pilotventils 8 ist ein Pilotventileingang 10 und ein Pilotventilausgang 11 ausgebildet. In Offenstellung, das heißt auch in Freigabestellung, des Pilotventils 8 kann Wasser durch einen als Kanal ausgebildeten Strömungsweg innerhalb des Pilotventils 8 vom Pilotventileingang 10 zum Pilotventilausgang 11 strömen. In Schließstellung des Pilotventils 8 ist kein Durchströmen des Pilotventils 8 möglich.

Der Grundkörper 9 des Pilotventils 8 ist in einer Einsetzrichtung 13 in eine dazu korrespondierende Pilotventilaufnahme 12 eingesetzt. An der Pilotventilaufnahme 12 ist daher ein Zulauf 14 ausgebildet, welcher an den Pilotventileingang 10 des Pilotventils 8 ansetzt und zu diesen korrespondiert. Dadurch ist ein Kanal ausgebildet, über welchen Wasser aus der Pilotventilausnahme 12 in das Pilotventil 8 einströmen kann. An der Pilotventilaufnahme 12 ist außerdem ein Ablauf 15 ausgebildet, welcher an den Pilotventilausgang 10 des Pilotventils 8 ansetzt und zu diesen korrespondiert. Dadurch ist ein weiterer Kanal ausgebildet, über welchen Wasser aus dem Pilotventil 12 in die Pilotventilaufnahme 12 strömen kann.

Die Einsetzrichtung 13 der unterschiedlichen Ausführungsformen der Ventilanordnung 1, 50, 75, 100 variiert, wobei sie durch die jeweilige Ausrichtung der Pilotventilaufnahme relativ zum Hauptventil 2 definiert ist.

Die Druckkammer 7 ist mit dem Zulauf 14 der Pilotventilaufnahme 12 verbunden, insbesondere über eine Verbindungsleitung verbunden.

Der Ablauf 15 der Pilotventilaufnahme 12 ist mit dem Hauptventilausgang 5 verbunden, insbesondere über eine Verbindungsleitung verbunden. Aus dem Pilotventil 8 ausströmendes Wasser gelangt daher über eine Mündungsöffnung 21 in der Wand des Hauptventilausgangs 5 in den Hauptventilausgang 5.

Wie anhand der Figuren zu erkennen ist, ist die Pilotventilaufnahme 12 topfförmig ausgebildet, so dass sie einen ebenfalls topfförmigen Aufnahmeraum zur Aufnahme des Pilotventils 8 aufweist. Ein Boden begrenzt die Pilotventilaufnahme 12 in Einsetzrichtung 13. Wie weiter erkennbar ist, ist die Pilotventilaufnahme 12, insbesondere der Aufnahmeraum, wenigstens halb so tief wie breit, vorzugsweise wenigstens so tief wie breit oder sogar wenigstens doppelt so tief wie breit, ausgestaltet, um somit eine sichere laterale, insbesondere kippsichere, Lagerung des Pilotventils 8 in der Pilotventilaufnahme 12 erreichen zu können. Der Ablauf 15 ist an einem inneren Endbereich der Pilotventilaufnahme 12, insbesondere des an einem inneren Endbereich Aufnahmeraums, ausgebildet. Der Zulauf 14 ist in einer Lateralwand der Pilotventilaufnahme 12, insbesondere an einem inneren Endbereich Aufnahmeraums, ausgebildet.

Der Druckaufbau innerhalb der Druckkammer 7 ist über das Pilotventil 8 regelbar. Durch ein Verschließen des Pilotventils 8 kann kein Wasser aus der Druckkammer 7 über den Zulauf 14 durch das Pilotventil 8 strömen. Daher baut sich innerhalb der Druckkammer 7 ein Innendruck auf. Durch den Druckaufbau innerhalb der Druckkammer 7 wird die Membran 6 druckbeaufschlagt und das Hauptventil 2 geschlossen.

Durch Öffnen des Pilotventils 8 baut sich der Innendruck innerhalb der Druckkammer 7 dadurch ab, dass Wasser über den Zulauf 14 und den Ablauf 15 in den Hauptventilausgang 5 ausströmt und sich daher eine Druckentlastung innerhalb der Druckkammer 7 einstellt. Der Ventilkörper 25 wird dadurch aus dem Ventilsitz 3 gedrückt und Wasser strömt vom Hauptventileingang 4 durch den Ventilsitz 3 in den Hauptventilausgang 5.

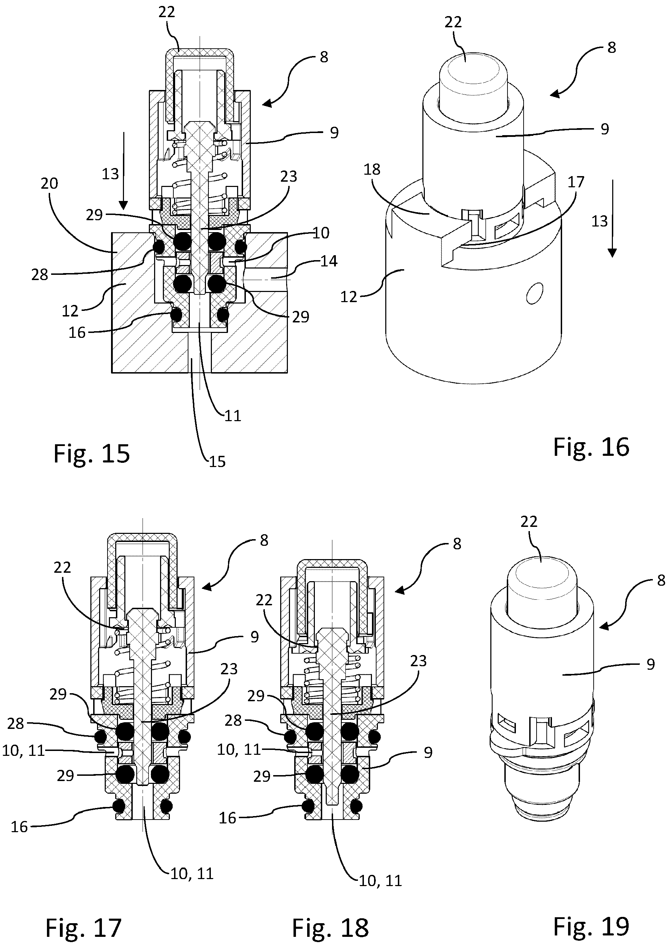

Um eine besonders gute Abdichtung zwischen der Pilotventilaufnahme 12 und dem Grundkörper 9 des Pilotventils 8 zu erreichen, ohne dass ein Anschrauben oder ähnliches des Grundkörpers 9 an der Pilotventilaufnahme erforderlich ist, sind der Pilotventileingang 10 und der Pilotventilausgang 11 des Pilotventils 8, wie insbesondere in den Figuren 15 bis 19 gezeigt ist, in Einsetzrichtung 13 zueinander versetzt angeordnet. Dies stellt eine besonders zuverlässige und dennoch gegenüber vorbekannten technischen Lösungen kostengünstige Kopplungsstelle des Pilotventils 8 und der Pilotventilaufnahme 12 dar. Darüber hinaus sind der Pilotventileingang 10 und der Pilotventilausgang 11 in Einsetzrichtung 13 voneinander beabstandet angeordnet, was ebenfalls auch aus den Figuren 15 bis 19 hervorgeht.

Der Pilotventileingang 10 ist am Grundkörper als zumindest im Mündungsbereich abschnittsweise radial ver-laufender Kanal und der Pilotventilausgang 11 am Grundkörper als zumindest im Mündungsbereich abschnittsweise axial verlaufender Kanal ausgebildet. Somit kann bei einer Durchströmung des Pilotventils 8 mit Wasser eine Druckentlastung einer Halterung, durch welche das Pilotventil in der Pilotventilaufnahme gehalten ist, erreicht werden. Die Halterung kann durch ein Befestigungsmittel 17 und ein Gegenbefestigungsmittel 18 ausgebildet sein.

Zur Ausbildung einer Abdichtung ist zwischen dem Pilotventileingang 10 und dem Pilotventilausgang 11 ein quer zur Einsetzrichtung 13 wirkender Dichtungsring 16 angeordnet, durch welchen eine Radialdichtung zwischen dem Grundkörper 9 und einer Wand der Pilotventilaufnahme 12 ausgebildet ist. Der als Kanal ausgebildete Strömungsweg innerhalb des Pilotventils 8 zwischen dem Pilotventileingang 10 und dem Pilotventilausgang 11 ist über ein weiteres Dichtelement 28, vorzugsweise ein als Dichtungsring ausgebildetes Dichtelement 28, in Verschlussstellung des Pilotventils 8 abgedichtet.

Bei der ersten Ausführungsform der Ventilanordnung 1, die in den Figuren 1 bis 5 gezeigt ist, ist der Zulauf 14 parallel zur Einsetzrichtung 13 ausgerichtet. Der Ablauf 15 ist hingegen quer, insbesondere in einem rechten Winkel, zur Einsetzrichtung 13 angeordnet. Bei dieser Ausführung der Ventilanordnung 1 ist die Pilotventilaufnahme 12 durch ein Gehäuseteil 20 des Hauptventils 2 ausgebildet. Die Einsetzrichtung 13 und die Verstellrichtung des Hauptventils 2 sind ebenfalls quer, insbesondere senkrecht, zueinander ausgerichtet. Die Einsetzrichtung 13 verläuft hierbei parallel zu einer Längsachse des Hauptventilausgangs 5. Somit stellt die Ventilanordnung 1 eine besonders platzsparende Ausgestaltung dar. Eine Verbindung zwischen dem Zulauf 14 und der Druckkammer 7 und eine Verbindung zwischen dem Ablauf 15 und dem Hauptventilausgang 5 ist jeweils über einen in dem Gehäuseteil 20 ausgebildeten Verbindungskanal realisiert.

Bei der zweiten Ausführungsform der Ventilanordnung 50, die in den Figuren 6 bis 8 gezeigt ist, ist der Zulauf 14 ebenfalls parallel zur Einsetzrichtung 13 angeordnet. Der Ablauf 15 ist hingegen quer, insbesondere in einem rechten Winkel, zur Einsetzrichtung 13 angeordnet. Im Gegensatz zur vorgenannten Ausführungsform ist das Pilotventil 8 zum Hauptventilausgang 5 abgewinkelt angeordnet, so dass die Einsetzrichtung 13 quer, insbesondere senkrecht, zu der Längsachse des Hauptventilausgangs 5 verläuft. Das Hauptventil 2 und das Pilotventil 8 sind derart angeordnet, dass ihre Verstellrichtungen parallel, insbesondere koaxial, und/oder entlang der Einsetzrichtung 13 verlaufen. Bei dieser Ausführung der Ventilanordnung 50 ist die Pilotventilaufnahme 12 ebenfalls durch ein Gehäuseteil 20 des Hauptventils 2 ausgebildet. Eine Verbindung zwischen dem Zulauf 14 und der Druckkammer 7 und eine Verbindung zwischen dem Ablauf 15 und dem Hauptventilausgang 5 ist jeweils über einen in dem Gehäuseteil 20 ausgebildeten Verbindungskanal realisiert.

Bei der dritten Ausführungsform der Ventilanordnung 75, die in den Figuren 9 bis 11 gezeigt ist, ist der Zulauf 14 quer, insbesondere senkrecht, zur Einsetzrichtung 13 angeordnet. Der Ablauf 15 ist parallel zur Einsetzrichtung 13 angeordnet. Wie bei der vorgenannten Ausführungsform ist das Pilotventil 8 zum Hauptventilausgang 5 abgewinkelt angeordnet, so dass die Einsetzrichtung 13 quer, insbesondere senkrecht, zu der Längsachse des Hauptventilausgangs 5 verläuft. Das Hauptventil 2 und das Pilotventil 8 sind derart angeordnet, dass ihre Verstellrichtungen parallel zueinander und/oder entlang der Einsetzrichtung 13 verlaufen. Bei dieser Ausführung der Ventilanordnung 50 ist die Pilotventilaufnahme 12 ebenfalls durch ein Gehäuseteil 20 des Hauptventils 2 ausgebildet. Eine Verbindung zwischen dem Zulauf 14 und der Druckkammer 7 und eine Verbindung zwischen dem Ablauf 15 und dem Hauptventilausgang 5 ist jeweils über einen in dem Gehäuseteil 20 ausgebildeten Verbindungskanal realisiert.

Bei der vierten Ausführungsform der Ventilanordnung 100, die in den Figuren 12 bis 14 gezeigt ist, besteht die Besonderheit, dass eine Verbindung zwischen dem Zulauf 14 und der Druckkammer 7 und eine Verbindung zwischen dem Ablauf 15 und dem Hauptventilausgang 5 jeweils über eine Schlauchverbindung 19 realisiert ist. Dies hat den Vorteil, dass die Pilotventilaufnahme 12 und das Pilotventil 8 relativ zum Hauptventil 2 annähernd frei positionierbar sind, da die Pilotventilaufnahme 12 nicht durch einen Gehäuseteil 20 des Gehäuses 26 des Hauptventils 2 ausgebildet ist. Denn die Pilotventilaufnahme 12 ist als separates Element ausgestaltet, die daher beabstandet vom Hauptventil platzierbar ist. Bei der vierten Ausführungsform der Ventilanordnung 100 ist der Zulauf 14 quer, insbesondere senkrecht, zur Einsetzrichtung 13 angeordnet. Der Ablauf 15 ist parallel zur Einsetzrichtung 13 angeordnet.

Um eine werkzeuglos lösbare Kopplung des Pilotventils 8 und der Pilotventilaufnahme 12 zu ermöglichen, weist die Ventilanordnung 1, 50, 75, 100 an dem Grundkörper 9 ein Befestigungsmittel 17 und an der Pilotventilaufnahme 12 ein Gegenbefestigungsmittel 18 auf. Durch das Befestigungsmittel 17 und das Gegenbefestigungsmittel 18 ist eine arretierbare und lösbare Verbindung ausgebildet. Wie besonders in Figur 16 gut zu erkennen ist, weist die die Ventilanordnung 1, 50, 75, 100 einen Steck-Dreh-Verschluss auf, mittels welchem eine einfache, stabile und lösbare Kopplung des Pilotventils 8 und der Pilotventilaufnahme 12 möglich ist. Vorzugsweise kann der Steck-Dreh-Verschluss als ein Bajonettverschluss ausgebildet sein.

Die Mündungsöffnung 21 des Ablaufs 15 in den Hauptventilausgang 5 ist beabstandet zu der Membran 6 angeordnet. Dadurch kann eine ungewollte Rückkopplung auf die Membran 6 und eine damit verbundene Funktionsstörung beim Schließen und Öffnen des Hauptventils 2 vermieden werden.

Das Pilotventil 8 ist zwischen einer Schließstellung und einer Offenstellung per Hand verstellbar. Dazu weist das Pilotventil 8 eine an sich bereits bekannte Drucktastenmechanik 22 auf, über welche ein Ventilstößel 23 entlang der Verstellrichtung des Pilotventils 8 verstellbar ist. Durch den Ventilstößel kann der Strömungsweg zwischen dem Pilotventileingang 10 und dem Pilotventilausgang 12 wahlweise geschlossen oder freigegeben werden.

Eine weitere, nicht anhand der Figuren dargestellte Ausführungsform der Ventilanordnung 1, 50, 75, 100 kann vorsehen, dass das Pilotventil als ein Quetschventil ausgebildet ist. Durch ein Quetschventil ist eine optimale Absperrung er-reichbar, wobei die Herstellungskosten relativ gering sind.

Die Pilotventile 8 bei sämtlichen Ausführungsformen der Ventilanordnung 1, 50, 75 und 100 sind baugleich ausgestaltet. Dies erlaubt es, das Pilotventil 8 unabhängig von der gewünschten Ausführungsform verwenden zu können.

In den Figuren 15 und 16 ist eine mögliche Ausgestaltung eines Pilotventils 8 gezeigt, dass in eine Pilotventilaufnahme 12 eingesetzt und darin arretiert ist.

Das baugleiche Pilotventil 8 ist in den Figuren 17 bis 19 erneut dargestellt, wobei das Pilotventil 8 in Figur 17 in Offenstellung und in Figur 18 in Schließstellung gezeigt ist.

Wie aus den Figuren 15, 17 und 18 hervorgeht weist das Pilotventil 8 zwei Öffnungskanäle auf, die wahlweise als Pilotventileingang 10 oder als Pilotventilausgang 11 verwendbar sind. Ob der jeweilige Öffnungskanal 10, 11 als Pilotventileingang 10 oder als Pilotventilausgang 11 fungiert, ist von der Durchflussrichtung des Wassers durch das Pilotventil 8 abhängig. Es sind also keine konstruktiven Änderungen am Pilotventil 8 notwendig, um das Pilotventil 8 bei unterschiedlichen Durchflussrichtungen einsetzen zu können. Allgemein kann daher gesagt werden, dass das Pilotventil 8 eine frei wählbare Durchflussrichtung aufweist. Eine Einströmrichtung des Pilotventileingangs 10 ist um einen Winkel, insbesondere um einen rechten Winkel, verdreht zur Ausströmrichtung des Pilotventilausgangs 11 angeordnet. Bevorzugt ist jedoch, dass der Pilotventilausgang 11 axial bezogen auf eine Längsachse des Grundkörpers 9 am Grundkörper 9 ausgebildet ist und der Pilotventileingang 10 radial bezogen auf eine Längsachse des Grundkörpers 9 am Grundkörper 9 ausgebildet ist. Dies ermöglicht es, eine Druckentlastung an der Kupplungsstelle von Pilotventil 8 und Pilotventilaufnahme 12 zu schaffen.

Um eine besonders gute Abdichtung des Zwischenraums zwischen dem Grundkörper 9 und der Pilotventilaufnahme 12 erreichen zu können, ist zwischen dem Grundkörper 9 und der Pilotventilaufnahme 12 zumindest ein weiteres Dichtelement 28, insbesondere ein Dichtungsring, angeordnet. Das Dichtelement 28 kann dabei zwischen der Drucktastenmechanik 22 und dem Pilotventileingang 10 angeordnet sein. Somit kann beispielsweise eine durch Wasser hervorgerufene Beschädigung der Drucktastenmechanik 22 aufgrund einer Leckage verhindert werden.

Das Pilotventil 8 weist weiter zur Abdichtung eines Zwischenraums zwischen dem Ventilstößel 23 und dem Grundkörper 9 zumindest ein inneres Dichtelement 29 auf, das zwischen dem Pilotventileingang 10 und dem Pilotventilausgang 11 quer, insbesondere senkrecht, zur Einsetzrichtung 13 wirkt. Insbesondere kann das zumindest eine innere Dichtelement 29 als ein Dichtungsring ausgestaltet sein, wobei der Ventilstößel 23 innerhalb der Ringöffnung des Dichtungsrings verschieblich geführt ist.

Das Pilotventil 8 kann ein weiteres inneres Dichtelement 29 aufweisen, dass zwischen dem Ventilstößel 23 und dem Grundkörper 9 und zwischen der Drucktastenmechanik 22 und dem Pilotventileingang 10 angeordnet ist. Insbesondere kann das weitere innere Dichtelement 29 als ein Dichtungsring ausgestaltet sein, wobei der Ventilstößel 23 innerhalb der Ringöffnung des Dichtungsrings verschieblich geführt ist.

Das Gehäuseteil 20 des Hauptventils kann als insbesondere vom restlichen Gehäuse 26 abnehmbarer Adapter 24 ausgestaltet sein. Die Druckkammer 7 ist zum Teil durch den Adapter 24 ausgebildet.

### Bezugszeichenliste

- 1: Ventilanordnung
- 50: Ventilanordnung
- 75: Ventilanordnung
- 100: Ventilanordnung
- 2: Hauptventil
- 3: Ventilsitz
- 4: Hauptventileingang
- 5: Hauptventilausgang
- 6: Membran
- 7: Druckkammer
- 8: Pilotventil
- 9: Grundkörper
- 10: Pilotventileingang
- 11: Pilotventilausgang
- 12: Pilotventilaufnahme
- 13: Einsetzrichtung
- 14: Zulauf
- 15: Ablauf
- 16: Dichtelement
- 17: Befestigungsmittel
- 18: Gegenbefestigungsmittel
- 19: Schlauchverbindung
- 20: Gehäuseteil des Hauptventils
- 21: Mündungsöffnung
- 22: Drucktastenmechanik
- 23: Ventilstößel des Pilotventils
- 24: Adapter
- 25: Ventilkörper
- 26: Ventilgehäuse
- 27: Zulauföffnung
- 28: weiteres Dichtelement
- 29: inneres Dichtelement

## Patentansprüche

1. Ventilanordnung (1, 50, 75, 100) mit einem Hauptventil (2), welches eine einen Ventilsitz (3) zwischen einem Hauptventileingang (4) und einem Hauptventilausgang (5) wahlweise verschließende und freigebende Membran (6) und eine von der Membran (6) abgeschlossene Druckkammer (7), mit welcher die Membran (6) durch eine Druckbeaufschlagung schaltbar ist, aufweist, und mit einem Pilotventil (8), mit welchem eine Druckentlastung der Druckkammer (7) in den Hauptventilausgang (5) des Hauptventils (2) steuerbar ist, wobei das Pilotventil (8) einen Grundkörper (9) aufweist, an welchem ein Pilotventileingang (10) und ein Pilotventilausgang (11) ausgebildet ist, wobei der Pilotventileingang (10) mit dem Pilotventilausgang (11) über das Pilotventil (8) wahlweise verbindbar und von diesem trennbar ist, und der Grundkörper (9) in eine Pilotventilaufnahme (12) in einer Einsetzrichtung (13) eingesetzt ist, wobei die Pilotventilaufnahme (12) einen zu dem Pilotventileingang (10) korrespondierenden Zulauf (14) und einen zu dem Pilotventilausgang (11) korrespondierenden Ablauf (15) hat, wobei der Zulauf (14) mit der Druckkammer (7) verbunden ist und der Ablauf (15) abströmseitig der Membran (6) in den Hauptventilausgang (5) mündet, **dadurch gekennzeichnet, dass** der Pilotventileingang (10) und der Pilotventilausgang (11) zumindest in Einsetzrichtung (13) zueinander versetzt angeordnet sind.

2. Ventilanordnung (1, 50, 75, 100) nach Anspruch 1, **dadurch gekennzeichnet, dass** zumindest in Gebrauchsstellung zwischen dem Pilotventileingang (10) und dem Pilotventilausgang (11) ein quer zur Einsetzrichtung (13) wirkendes Dichtelement (16), insbesondere ein Dichtungsring, angeordnet ist, vorzugsweise an dem Grundkörper (9), und/oder dass durch ein oder das Dichtelement (16) eine Radialdichtung zwischen dem Pilotventileingang (10) und dem Pilotventilausgang (11), insbesondere zwischen dem Grundkörper (9) und der Pilotventilaufnahme (12), ausbildet ist.

3. Ventilanordnung (1, 50, 75, 100) nach einem der vorangehenden Ansprüche, **dadurch gekennzeichnet, dass** der Zulauf (14) und/oder der Ablauf (15) quer zu der Einsetzrichtung (13) ausgerichtet ist/sind und/oder dass der Pilotventileingang (10) und/oder der Pilotventilausgang (11) quer zu der Einsetzrichtung (13) ausgerichtet ist/sind.

4. Ventilanordnung (1, 50, 75, 100) nach einem der vorangehenden Ansprüche, **dadurch gekennzeichnet, dass** an dem Grundkörper (9) ein Befestigungsmittel (17) und an der Pilotventilaufnahme (12) ein Gegenbefestigungsmittel (18) ausgebildet ist, die eine arretierbare und lösbare Verbindung, insbesondere einen Steck-Dreh-Verschluss, vorzugsweise einen Bajonettverschluss, bilden.

5. Ventilanordnung (1, 50, 75, 100) nach einem der vorangehenden Ansprüche, **dadurch gekennzeichnet, dass** die Verbindung zwischen dem Zulauf (14) und der Druckkammer (7) und/oder die Verbindung zwischen dem Ablauf (15) und dem Hauptventilausgang (5) über eine Schlauchverbindung (19) realisiert ist.

6. Ventilanordnung (1, 50, 75, 100) nach einem der vorangehenden Ansprüche, **dadurch gekennzeichnet, dass** der Pilotventileingang (10) und der Pilotventilausgang (11) in Einsetzrichtung (13) voneinander beabstandet angeordnet sind und/oder dass der Pilotventileingang (10) am Grundkörper (9) als zumindest abschnittsweise radial verlaufender Kanal und/oder der Pilotventilausgang (11) am Grundkörper (9) als zumindest abschnittsweise axial verlaufender Kanal ausgebildet ist.

7. Ventilanordnung (1, 50, 75, 100) nach einem der vorangehenden Ansprüche, **dadurch gekennzeichnet, dass** die Pilotventilaufnahme (12) in einem Gehäuseteil (20) des Hauptventils (2) ausgebildet ist und/oder dass die Pilotventilaufnahme (12) topfförmig ausgebildet ist, insbesondere wobei die Pilotventilaufnahme (12) wenigstens halb so tief wie breit, vorzugsweise wenigstens so tief wie breit oder sogar wenigstens doppelt so tief wie breit, ausgestaltet ist.

8. Ventilanordnung (1, 50, 75, 100) nach einem der vorangehenden Ansprüche, **dadurch gekennzeichnet, dass** der Ablauf (15) an einem inneren Endbereich der Pilotventilaufnahme (12) ausgebildet ist, insbesondere wobei der Pilotventilausgang (11) axial und/oder in Einsetzrichtung (13) orientiert ist, und/oder dass eine Mündungsöffnung (21) der Verbindung zwischen dem Ablauf (15) und dem Hauptventilausgang (5) beabstandet zu der Membran (6) des Hauptventils (2) angeordnet ist.

9. Ventilanordnung (1, 50, 75, 100) nach einem der vorangehenden Ansprüche, **dadurch gekennzeichnet, dass** das Pilotventil (8) handbetätigbar ist.

10. Ventilanordnung (1, 50, 75, 100) nach einem der vorangehenden Ansprüche, **dadurch gekennzeichnet, dass** das Pilotventil (8) zur Betätigung eine Drucktastenmechanik (22), einen Kippschalter und/oder einen Drehschalter hat.

11. Ventilanordnung (1, 50, 75, 100) nach einem der vorangehenden Ansprüche, **dadurch gekennzeichnet, dass** das Pilotventil (8) einen Ventilstößel (23) aufweist.

12. Ventilanordnung (1, 50, 75, 100) nach einem der vorangehenden Ansprüche, **dadurch gekennzeichnet, dass** das Pilotventil (8) als ein Quetschventil ausgebildet ist.

13. Ventilanordnung (1, 50, 75, 100) nach einem der vorangehenden Ansprüche, **dadurch gekennzeichnet, dass** das Pilotventil (8) in der Pilotventilaufnahme (12) lösbar befestigt ist, insbesondere mittels eines Bajonettverschlusses.

14. Baureihe von Ventilanordnungen (1, 50, 75, 100) mit wenigstens zwei Varianten, die jeweils eine Ventilanordnung (1, 50, 75, 100) nach einem der vorangehenden Ansprüche bilden, wobei die Pilotventile (8) der wenigstens zwei Varianten baugleich sind und wobei in einer ersten Variante der wenigstens zwei Varianten das Pilotventil (8) in einer an einem Gehäuseteil (20) des Hauptventils (2) ausgebildeten Pilotventilaufnahme (12) angeordnet ist und in einer zweiten Variante der wenigstens zwei Varianten das Pilotventil (8) in einer in Bezug auf das jeweilige Hauptventil (2) abweichenden Position und/oder Orientierung angeordnet ist.

15. Baureihe nach dem vorangehenden Anspruch, **dadurch gekennzeichnet, dass** in der zweiten Variante der wenigstens zwei Varianten das Pilotventil (8) in einer von dem Hauptventil (2) separaten Pilotventilaufnahme (12) angeordnet ist.

16. Baureihe nach Anspruch 14 oder 15, **dadurch gekennzeichnet, dass** in der zweiten Variante das Pilotventil (8) über wenigstens eine Schlauchverbindung (19) mit dem Hauptventil (2) verbunden ist.

17. Baureihe nach einem der Ansprüche 14 bis 16, **dadurch gekennzeichnet, dass** sich die erste Variante und die zweite Variante durch einen zwischen dem Hauptventil (2) und dem Pilotventil (8) vermittelnden Adapter (24) unterscheiden, insbesondere wobei der Adapter (24) zumindest zeitweise die Druckkammer (7) bildet.
